(19) Europäisches Patentamt / European Patent Office / Office européen des brevets

(11) **EP 1 491 320 B1**

(12) **EUROPEAN PATENT SPECIFICATION**

(45) Date of publication and mention
of the grant of the patent:
**25.04.2012 Bulletin 2012/17**

(51) Int Cl.:
***B29C 47/88*** (2006.01)

(21) Application number: **03743589.8**

(22) Date of filing: **04.03.2003**

(86) International application number:
**PCT/JP2003/002487**

(87) International publication number:
**WO 2003/074255 (12.09.2003 Gazette 2003/37)**

(54) **PRODUCTION METHOD OF SYNTHETIC RESIN SHEET, SYNTHETIC RESIN SHEET AND PRODUCTION DEVICE FOR THE SHEET**

VERFAHREN ZUR HERSTELLUNG VON KUNSTHARZFOLIE, KUNSTHARZFOLIE UND VORRICHTUNG ZUR HERSTELLUNG DER FOLIE

PROCEDE DE FABRICATION D'UNE FEUILLE DE RESINE SYNTHETIQUE, FEUILLE DE RESINE SYNTHETIQUE ET DISPOSITIF DE FABRICATION

(84) Designated Contracting States:
**AT BE BG CH CY CZ DE DK EE ES FI FR GB GR HU IE IT LI LU MC NL PT RO SE SI SK TR**

(30) Priority: **05.03.2002 JP 2002059550**

(43) Date of publication of application:
**29.12.2004 Bulletin 2004/53**

(73) Proprietor: **Idemitsu Unitech Co., Ltd.**
**Tokyo 112-0002 (JP)**

(72) Inventors:
• **FUNAKI, Akira**
**Sodegaura-shi, Chiba 299-0205 (JP)**
• **KUBO, Masahiro**
**Sodegaura-shi, Chiba 299-0205 (JP)**

(74) Representative: **Clarke, Lionel Paul et al**
**Gill Jennings & Every LLP**
**The Broadgate Tower**
**20 Primrose Street**
**London EC2A 2ES (GB)**

(56) References cited:
**EP-A- 0 716 911     EP-A- 0 781 644**
**EP-A- 0 796 716     EP-A1- 0 963 832**
**EP-A2- 0 838 321     JP-A- 9 029 818**
**US-A- 2 431 042**

## Description

### Technical Field

The present invention relates to a production method for producing a synthetic resin sheet capable of forming a synthetic resin sheet having a low haze value, a smooth surface, and high rigidity at high speed from molten resin using a metallic endless belt without drawing, a synthetic resin sheet, and a production device for the same.

### Background Art

There has been known a method for producing a synthetic resin film or sheet, especially a crystalline resin sheet having high transparency and high rigidity such as the one disclosed in Japanese Patent Laid-Open Publication NO. HEI 9-29818. In the method described in this Japanese Patent Laid-Open Publication NO. HEI 9-29818, molten resin is quenched with water, and the thus obtained preprocessed planar material is preheated and then pressed in the heat by a belt with a heated and mirror-finished outer circumferential surface to form a crystallized sheet or film with a mirror-finished surface.

With the method employing the water quenching and heating belt treatment as in Japanese Patent Laid-Open Publication NO. HEI 9-29818, it is possible to obtain a film or sheet having high transparency and high rigidity in a certain range of film production speed (e.g. the range from about 14 to 15 m/min.). However, when the film production speed is raised to improve the productivity (e.g. 20 m/min. or higher), a negative phenomenon generally called as blister occurs, which makes it impossible to obtain an excellent film or sheet.

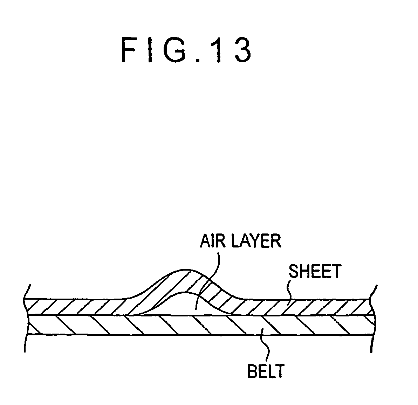

Because the quenching is performed without applying pressure, the preprocessed material obtained by the water quenching has a rough surface with waviness and surface irregularity. Therefore, when the preprocessed material is introduced into the heating belt with a raised circulating speed for raising the sheet production speed, air enters between the preprocessed material and the heating belt as shown in Fig. 13, which may impair the appearance of the produced film or sheet.

To overcome this problem, there has been known a method for producing a film or a sheet without employing the water quenching. For example, the one disclosed in Japanese Patent Laid-Open Publication No. HEI 9-136346 comprises a metallic endless belt having a mirror-finished surface and disposed around a first cooling roller and a second cooling roller with the surface coated with an elastic material, and a third cooling roller. Molten resin is introduced into between an outer circumferential surface of the metallic endless belt with the temperature adjusted at no lower than the dew point nor higher than 50 °C and an outer circumferential surface of the third cooling roller in the state where the elastic material is elastically deformed, and then pressed to form a planar sheet material while being cooled. Further, the third cooling roller presses the sheet material on the metallic endless belt to form a sheet while cooling it.

With the method of cooling and pressing a sheet material with a roller having a mirror-finished surface and a metallic endless belt to produce a sheet or film as in Japanese Patent Laid-Open Publication No. HEI 9-136346, although a sheet having high transparency can be obtained, the heating treatment is not included and hence the rigidity of the sheet is low.

EP 0781644 discloses a heat-treating method of a thermoplastic resin film, in which a produced film can be used for structural materials and materials for electronic components. Furthermore, EP 0796716 discloses a method for manufacturing thermoplastic sheets bearing embossed patterns thereon and an apparatus therefor.

EP 0716911 further discloses a pressure roll having good cooling characteristics, a molding apparatus of a plastic sheet equipped with the pressure roll and a process for manufacturing the pressure roll.

### Disclosure of the Invention

In view of above described problems, an object of the present invention is to provide a production method capable of producing a crystalline resin sheet having high transparency and high rigidity with high productivity, a sheet produced by the method, and a production device for the same.

A production method of a highly-rigid synthetic resin sheet according to the present invention including the steps of: obtaining a preprocessed sheet by introducing into and pressing molten crystalline resin between a first metallic endless belt that is disposed around a first cooling roller and a second cooling roller with the outer circumferential surface thereof coated with an elastic material so that the belt can circulate and a third cooling roller that faces the second cooling roller through the first metallic endless belt, at least either one the outer circumferential surfaces of which is a mirror surface, and holding and moving the introduced molten crystalline resin between the first metallic endless belt and the third cooling roller for quenching the sheet, the preprocessed sheet exhibiting an internal haze of 20% or below and a surface roughness Rmax of 0.5 $\mu$m or below; and heat treating the preprocessed sheet by pressing the sheet on either one of the outer circumferential surfaces of a heated roller and a metallic heating endless belt to thermally stick the sheet thereon, moving the thermally stuck sheet between the outer circumferential surfaces of the heated roller and the heating endless belt, and peeling off this sheet from the outer circumferential surface of the heated roller and then from the outer circumferential surface of the heating endless belt.

In the present invention, in the step of obtaining a preprocessed sheet, the molten crystalline resin introduced to a section between the first metallic endless belt and the third cooling roller is cooled and at the same time flatly pressed in association with elastic deformation of the elastic material on the second cooling roller between the first metallic endless belt and the third cooling roller with at least either one of the outer circumferential surfaces being mirror-finished, so that transfer of a mirror surface and the cooling are carried out with high efficiency, and even when production is carried at high speed, a sheet-formed or film-formed preprocessed sheet with extremely small surface roughness and low haze can easily be obtained. Further in the heat treatment step, the preprocessed sheet is thermally stuck on either one of the outer circumferential surfaces of the heated roller and the heating endless belt and is pressed and heated while being moved between the outer circumferential surfaces of the heated roller and the heating endless belt, and then peeled off from the heated roller and then from the heating endless belt, so that, even when crystalline resin is used, the haze becomes further lower, and a sheet having high transparency and high rigidity can easily be obtained at a high speed.

The production method of a highly-rigid synthetic resin sheet according to the present invention preferably includes the steps of: providing a fourth cooling roller and a second metallic endless belt that is disposed around the third cooling roller and the fourth cooling roller so that the second endless belt can circulate in the direction reverse to that in which the first metallic endless belt circulates and is provided with the outer circumferential surface facing the outer circumferential surface of the first metallic endless belt, wherein the molten crystalline resin is introduced between the first metallic endless belt and the second metallic endless belt while pressed together with the first metallic endless belt and the second metallic endless belt between the second cooling roller and the third cooling roller for quenching the sheet.

In the present invention, in the step of obtaining a preprocessed sheet, the molten crystalline resin introduced into between the first metallic endless belt and the second metallic endless belt is held by and moved between the first metallic endless belt and the second metallic endless belt with either one of the outer circumferential surfaces being mirror-finished while pressed in association with elastic deformation of the elastic material on the second cooling roller to be quenched, so that the steps of cooling and flatly pressing are carried out simultaneously, and therefore transfer of a mirror surface and cooling are carried out with high efficiency, and a sheet-formed or film-formed preprocessed sheet having extremely small surface roughness and low haze can easily be obtained even when produced at high speed. Further in the heat treatment step, a preprocessed sheet is stuck on either one of the outer circumferential surfaces of the heated roller and the heating endless belt and moved between the heated roller and the outer circumferential surface of the heating endless belt to heat and press the sheet simultaneously, and then the sheet is peeled off from the heated roller and then from the heating endless belt, so that, even when crystalline resin is used, a sheet having further lower haze, high transparency, and high rigidity can easily be obtained.

In the highly-rigid synthetic resin sheet according to the present invention, there is no specific restriction over synthetic resin used for production of the synthetic resin, specifically crystalline synthetic resin is used. For instance, polypropylene-based resin, polyolefin resin such as high density polyethylene, and polyester resin such as polyethylene terephthalate and polybutylene terephthalate can be enlisted. Especially the polypropylene-based resin is suited to production of the synthetic resin according to the present invention because of the heat resistance, high rigidity, transparency, adaptability to fabricating, and the like. Thickness of the synthetic resin sheet is preferably in the range no less than 50 $\mu$m nor more than 3000 $\mu$m, and more preferably in the range no less than 100 $\mu$m nor more than 2000$\mu$m, and the thickness in this range is suited to production of a sheet with a relatively large thickness and hard to be cooled.

In the production method of highly-rigid synthetic resin sheet according to the present invention, the step of obtaining a preprocessed sheet and the heat treatment step should preferably be carried out in succession.

In the present invention, the step of obtaining a preprocessing and the heat treatment step are carried out in succession to produce a synthetic resin sheet, so that a synthetic resin sheet with high transparency and high rigidity can easily be obtained continuously and at high speed.

In the production method of highly-rigid synthetic resin sheet according to the present invention, it is preferable to once wind up the preprocessed sheet obtained in the step of obtaining the preprocessed sheet and then wind off the preprocessed sheet for carrying out the heat treatment step.

In the present invention, the preprocessed sheet obtained in the step of obtaining the preprocessed sheet is once wound up and the heat treatment step is carried out after winding off the wound-up preprocessed sheet, so that flexibility in production for obtaining a synthetic resin sheet is high, and production process management is easy.

In the production method of synthetic resin sheet according to the present invention, the internal haze of the preprocessed sheet is 20% or below, and the surface roughness Rmax of at least either one surface thereof is 0.5$\mu$m or below.

In the present invention, the preprocessed sheet is produced so that the internal haze is 20% or below and the surface roughness Rmax of at least either one surface thereof is 0.5 $\mu$m or below. Because of this feature, a high transparency and high rigidity sheet can be surely produced even at a high speed in the heat treatment step.

When the internal haze is larger than 20%, the internal haze is too high, which may make it impossible to obtain a synthetic resin sheet with high transparency. On the other hand, when the surface roughness Rmax is larger than 0.5 $\mu$m, air may be involved when thermally sticking the sheet on the roller and the heating endless belt, which may in turn cause the so-called blister. Therefore, the preprocessed sheet is formed so that the internal haze is 20% or below and the surface roughness Rmax is 0.5$\mu$m or below.

In the production method of highly-rigid synthetic resin sheet according to the present invention, the preprocessed sheet is preferably preheated and then pressed on either one of the outer circumferential surfaces of the heated roller or the heating endless belt to be thermally stuck on thereon.

In the present invention, the preprocessed sheet is previously preheated, and then is pressed on one of the outer circumferential surfaces of the heated roller or the heating endless belt to thermally stick the sheet thereon. Because of this feature, rapid expansion of the preprocessed sheet which occurs when the sheet is thermally stuck on the roller and the heating endless belt is suppressed, which enables production of a sheet with high transparency and high rigidity at high speed.

In the production method of highly-rigid synthetic resin sheet according to the present invention, the resin is preferably polypropylene-based resin.

In the present invention, polypropylene-based resin is used as resin. Because of this feature, especially even with the polypropylene-based resin which is crystalline resin, a sheet with high transparency and high rigidity can be produced at high speed in the stable condition.

The highly-rigid synthetic resin sheet according to the present invention is obtained by the production method of synthetic resin sheet according to the present invention as described above, so that the advantages as described above are provided, and a synthetic resin sheet with high transparency and high rigidity can be produced at high speed.

A production device for a highly-rigid synthetic resin sheet according to the present invention is provided with: a preprocessed sheet production device for molding a preprocessed sheet including: a T-die extrusion device; a pressure section having a first cooling roller, a second cooling roller with the outer circumferential surface coated with an elastic material, a first metallic endless belt disposed around the first cooling roller and the second cooling roller, and a third cooling roller provided so that molten resin can be introduced to between the outer circumferential surface thereof and the outer circumferential surface of the first metallic endless belt, at least either one of the outer circumferential surfaces of which is a mirror surface, the pressure section pressing the introduced molten resin together with the first metallic endless belt between the second cooling roller and the third cooling roller; and a section for holding and moving the resin between the first metallic endless belt and the third cooling roller; and a heat-treating device including a heated roller, and a metallic heating endless belt heated and provided with the outer circumferential surface thereof to face the outer circumferential surface of the roller so that the belt can circulate, the heat-treating device being adapted to thermally stick the preprocessed sheet produced by the preprocessed sheet production device on either one of the outer circumferential surfaces of the roller and the heating endless belt, moving the sheet between the outer circumferential surfaces of the roller and the heating endless belt, and peeling off the sheet from the outer circumferential surface of the roller and then from the outer circumferential surface of the heating endless belt.

With the configuration as described above, the production device for a synthetic resin sheet according to the present invention can achieve the operations and advantages like those provided by the production method of synthetic resin sheet according to the present invention described above, and can produce a synthetic resin sheet with high transparency and high rigidity at a high speed.

A production device for a synthetic resin sheet may be provided with: a fourth roller and a second metallic endless belt that is disposed around the third cooling roller and the fourth cooling roller so that the second endless belt can circulate in the direction reverse to that in which the first metallic endless belt circulates and is provided with the outer circumferential surface facing the outer circumferential surface of the first metallic endless belt, wherein the molten crystalline resin is introduced between the first metallic endless belt and the second metallic endless belt while pressed together with the first metallic endless belt and the second metallic endless belt between the second cooling roller and the third cooling roller for quenching the sheet.

With the configuration as described above, the production device for a synthetic resin sheet according to the present invention can provide the same actions and advantages as those provide in the production method as described above, namely can produce a synthetic resin sheet with high transparency and high rigidity at high speed.

In the production device for a highly-rigid synthetic resin sheet according to the present invention, the preprocessed sheet is preferably preheated and then pressed to either one of the outer circumferential surfaces of the heated roller and the heating endless belt to be stuck thereon.

In the production device for a synthetic resin sheet, a preprocessed sheet is preferably preheated and then pressed to either one of the outer circumferential surfaces of the heated roller and the heating endless belt to be stuck thereon. With this operation, rapid expansion of the preprocessed sheet when the sheet is stuck on the roller and the heating endless belt is suppressed, and the sheet is produced with high transparency and high rigidity.

In the production device for a highly-rigid synthetic resin sheet according to the present invention, the heat-treating device preferably includes an elastic roller for temporally welding and thermally sticking the preprocessed sheet on either one of the outer circumferential surfaces of the roller and the heating endless belt.

In this invention, the preprocessed sheet is temporally welded and stuck to and thermally sticking on either one of the outer circumferential surfaces of the roller the heating endless belt. Because of this feature, air between the belt and the preprocessed sheet is excluded, so that production of a synthetic resin sheet at higher speed is possible.

**Brief Description of Drawings**

Fig. 1 is a schematic view showing a production device for producing a synthetic resin sheet according to a first embodiment of the present invention;

Fig. 2 is a schematic view showing a cooling device in the production device shown in Fig. 1;

Fig. 3 is a schematic view showing a heat-treating device shown in Fig. 1;

Fig. 4 is a schematic view showing a cooling device in the production device for producing a synthetic resin sheet according to a variant of the first embodiment;

Fig. 5 is a schematic view showing a cooling device in the production device for producing a synthetic resin sheet according to another variant of the first embodiment;

Fig. 6 is a schematic view showing a heat-treating device in the production device for producing a synthetic resin sheet according to a further variant of the first embodiment;

Fig. 7 is a schematic view showing a heat-treating device in the production device for producing a synthetic resin sheet according to still a further variant of the first embodiment;

Fig. 8 is a schematic view showing a heat-treating device in the production device for producing a synthetic resin sheet according to yet another variant of the first embodiment;

Fig. 9 is a schematic view showing a heat-treating device in the production device for producing a synthetic resin sheet according to still another variant of the first embodiment;

Fig. 10 is a schematic diagram showing a cooling device in a production device for producing a synthetic resin sheet according to a second embodiment of the present invention;

Fig. 11 is a schematic view showing a cooling device in the production device for producing a synthetic resin sheet according to a variant of the second embodiment;

Fig. 12 is a schematic view showing a cooling device in the production device for producing a synthetic resin sheet according to still another variant of the second embodiment; and

Fig. 13 is an illustration showing a blister formed when a synthetic resin sheet is produced at high speed with the conventional technology.

**Best mode for Carrying out the Invention**

[First Embodiment]

A production method of a synthetic resin sheet according to a first embodiment of the present invention is described below with reference to the related drawings.

(Configuration of the production device for a synthetic resin sheet)

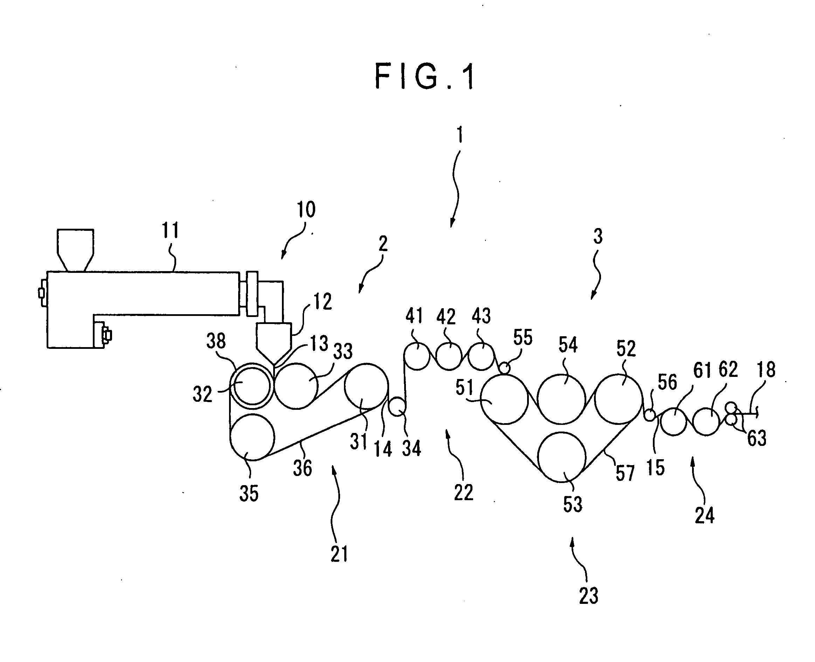

Fig. 1 is a schematic view showing configuration of a production device according to this embodiment, and this production device 1 has a preprocessed sheet molding device 2 for melting and kneading a raw material to extrude into a sheet form, and then quenching it, and a heat-treating device 3 for heating this preprocessed sheet produced by the preprocessed sheet molding device 2.

The preprocessed sheet molding device 2 includes a T-die extrusion device 10, and a cooling device 21. The T-die extrusion device 10 includes an extrusion machine 11 and a T die 12. As the extrusion machine 11, for instance, a single-screw extrusion machine or multi-screw extrusion machine is used. Further the T die 12 is detachably attached to the extrusion machine 11, and molds molten resin 13 extruded from the extrusion machine 11 into a film form.

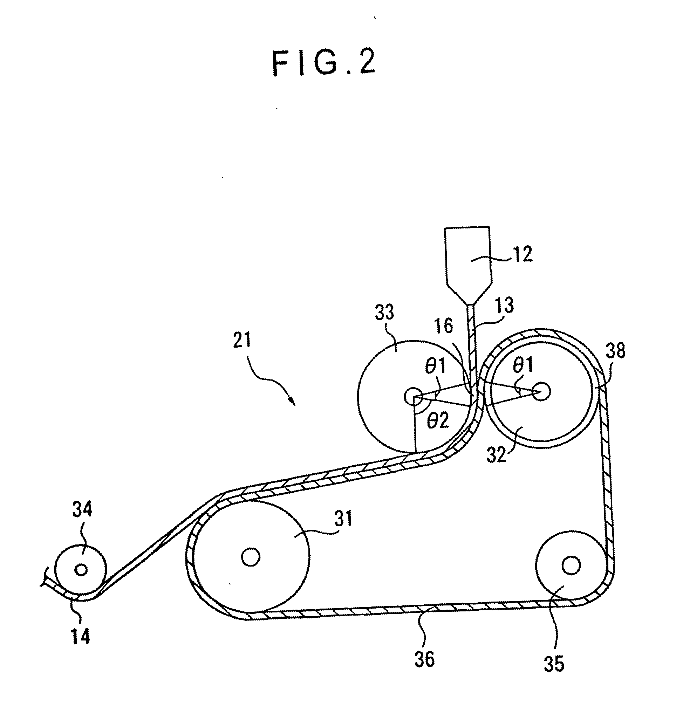

The cooling device 21 in the preprocessed sheet molding device 2 cools, presses and molds the molten resin 13 extruded and molded by the T die 12 into a film form to form a preprocessed sheet 14. This cooling device 21 includes, as shown in Fig. 1 and Fig. 2, a first cooling roller 31, a second cooling roller 32, a third cooling roller 33, a fourth cooling roller 34, a fifth cooling roller 35, a first metallic endless belt 36, and a driver not shown.

The first cooling roller 31, the second cooling roller 32, the third cooling roller 33, the fourth cooling roller 34, and the fifth cooling roller 35 are made of a material with high thermal conductivity such as metal. The first cooling roller 31, the second cooling roller 32, the third cooling roller 33, and the fifth cooling roller 35 should preferably have a large diameter in view of durability of the first metallic endless belt 36. Particularly, the diameter in the range from 100 to 1500 mm is preferable in the actual use.

Each of the first cooling roller 31, the second cooling roller 32, the third cooling roller 33, and the fifth cooling roller 35 has an temperature adjuster not shown based on a water cooling system etc. for enabling adjustment of the surface temperature. The present invention is not limited to the configuration in which the temperature adjuster is provided directly on each of the rollers 31, 32, 33, 35, and also the configuration is allowable in which a roller dedicated for the cooling is provided or cooling is performed by an external cooling device.

The driver is connected to at least one of the first cooling roller 31, the second cooling roller 32, and the fifth cooling roller 35. The driver drives to rotate at least one of the first cooling roller 31, the second cooling roller 32, and the fifth cooling roller 35 connected thereto.

The second cooling roller 32 has an outer circumferential surface coated with an elastic material 38. The elastic material 38 may be fluorinated rubber, polysiloxane rubber, or EPDM (ethylene-propylene-diene copolymer). In order to elastically deform for providing appropriate surface pressure, the elastic material 38 has the hardness (based on the JIS K6 301A) of, for instance, not lower than 60 degrees and not higher than 90 degrees, and preferably not higher than 85 degrees, and the thickness of 3 mm or more. When the hardness is higher than 90 degrees, the elasticity becomes weaker, and the so-called resin bank is often formed when the material contacts almost simultaneously the third cooling roller 33 and the first metallic endless belt 36 as described later. The elastic material 38 may cover not only an outer circumferential surface of the second cooling roller 32, but also the entire surface thereof.

The first metallic endless belt 36 is made from stainless steel, carbon steel, a titanium alloy or the like and is formed in an endless belt form. The thickness may be set to an arbitrary value, but is preferably not less than 0.3 mm, and more preferably in the range from not less than 0.3 mm to not larger than 2.0 mm. The first metallic endless belt 36 has a mirror-finished outer circumferential surface. The surface roughness Rmax of the mirror surface should preferably be not higher than 0.5 $\mu$m. This first metallic endless belt 36 is disposed around the first cooling roller 31, second cooling roller 32, and fifth cooling roller 35 so that the belt can circulate, and is circulated when driven by the driver.

The third cooling roller 33 has an outer circumferential surface facing the outer circumferential surface of the first metallic endless belt 36, and is rotatably provided so that the molten resin 13 extruded and molded into a film form from the T die 12 can be introduced into between the outer circumferential surface of the third cooling roller 33 and the outer circumferential surface of the first metallic endless belt 36. The third cooling roller 33 presses the introduced film-formed molten resin 13 and the first metallic endless belt 36 on the second cooling roller 32. The third cooling roller 33 has a mirror-finished outer circumferential surface with the surface roughness of 0.5 $\mu$m or below like the first metallic endless belt 36. Further the mirror-finished outer circumferential surface may be provided for at least either the third cooling roller 33 or the first metallic endless belt 36.

The fourth cooling roller 34 is rotatably provided with an outer circumferential surface thereof facing the outer circumferential surface of the first metallic endless belt 36, and guides the preprocessed sheet 14 held and cooled between the first metallic endless belt 36 and the third cooling roller 33. This fourth cooling roller 34 may be arranged so that the cooling roller 34 contacts the first cooling roller 31 thorough the molded preprocessed sheet 14 and the first metallic endless belt 36. Further, the fourth cooling roller 34 may have a temperature adjuster not shown, and may have a mirror-finished outer circumferential surface.

The heat-treating device 3 in the production device 1 includes a preheating device 22, a main body 23 of the heat-treating device, and a cooling device 24. The preheating device 22 warms to preheat the preprocessed sheet 14 molded by the preprocessed sheet production device 2. The preheating device 22 includes, as shown in Fig. 1, a first preheating roller 41, a second preheating roller 42, and a third preheating roller 43. As a material for these first preheating roller 41, second preheating roller 42, and third preheating roller 43, a material with high thermal conductivity such as metal is used.

A temperature adjuster not shown such as that based on a vapor heating system enabling adjustment of surface temperature is provided on each of the first preheating roller 41, the second preheating roller 42, and the third preheating roller 43. The present invention is not limited to the configuration in which the temperature adjuster is provided directly on each of the preheating rollers 41, 42, 43, and also the configuration is allowable in which a dedicated preheating roller is provided separately or preheating is performed with an external preheating device.

Configuration of the preheating device 22 is not limited to that in which these three rollers 41 to 43 are provided, and also the configuration is allowable in which one or a plurality of rollers are provided, or in which an endless belt is used so long as the preprocessed sheet 14 can be preheated.

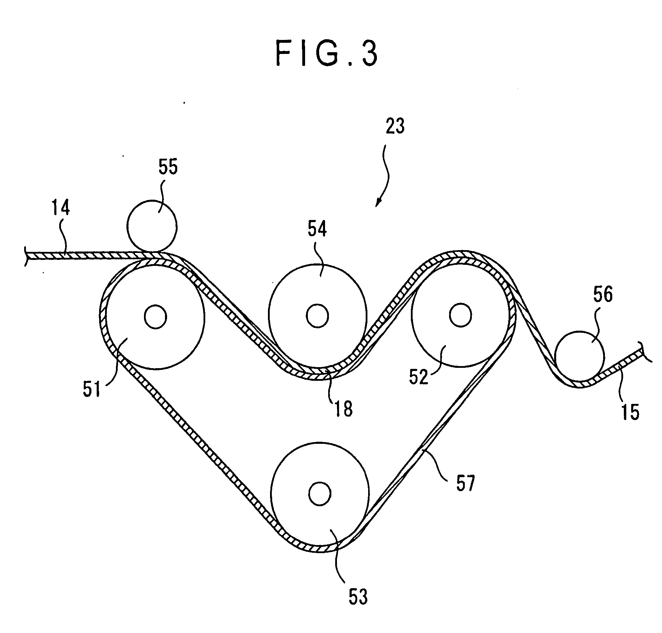

The main body 23 of the heat-treating device 3 heats and runs the preprocessed sheet 14 preheated by the preheating device 22. This main body 23 of the preheating device includes, as shown in Fig. 1 and Fig. 3, a first heating roller 51, a second heating roller 52, a third heating roller 53, a fourth heating roller 54, a rubber roller 55 as a pressure roller, a guide roller 56, a metallic heating endless belt 57, and a driver not shown.

As a material for the first heating roller 51, the second heating roller 52, the third heating roller 53, the fourth heating roller 54, and the guide roller 56, a material with high thermal conductivity such as metal is used. Further the first heating roller 51, the second heating roller 52, the third heating roller 53, and the fourth heating roller 54 should preferably have a large diameter respectively in view of durability of the metallic heating endless belt 57, and the diameter is preferably in the range from 100 to 1500 mm in the actual use.

These first heating roller 51, second heating roller 52, third heating roller 53, and fourth heating roller 54 respectively have a temperature adjuster now shown based on a vapor heating system or the like enabling adjustment of surface temperature. The present invention, however, is not limited to the configuration in which the temperature adjuster is provided directly on each of the rollers 51 to 54, and also the configuration is allowable in which a dedicated roller for heating is provided, or in which heating is performed with an external heating device.

The driver is connected to at least any one of the first heating roller 51, second heating roller 52, and third heating roller 53. With the configuration, the driver drives to rotate at least any one of the first heating roller 51, the second heating roller 52, and the third heating roller 53 connected thereto.

The heating endless belt 57 is made from such a material as stainless steel, carbon steel, or a titanium alloy, and is formed into an endless belt form. This thickness may be set to an arbitrary value, but is preferably 0.3 mm or more in view of strength. This heating endless belt 57 is disposed around the first heating roller 51, the second heating roller 52, and the third heating roller 53 so that the endless belt 57 can circulate, and circulates when driven by the driver. The driver is driven and controlled so that the circulating speed of the heating endless belt 57 is substantially the same as that of the first metallic endless belt 36 which circulates when driven by the driver in the cooling device 21.

The fourth heating roller 54 has an outer circumferential surface facing the outer circumferential surface of the metallic heating endless belt 57, and is rotatably provided, in the state where the heating roller 54 intersects with the outer tangent lines of the first heating roller 51 and the second heating roller 52, so that the preheated preprocessed sheet 14 can be introduced to between the outer circumferential surface of the fourth heating roller 54 and the outer circumferential surface of the metallic heating endless belt 57.

The outer circumferential surface of the rubber roller 55 faces a part of the outer circumferential surface of the heating endless belt 57 where the endless belt 57 is wound around the first heating roller 51. The rubber roller 55 is coated with a cushioning material not shown at least on the outer circumferential surface. This cushioning material is made from such a material as fluorinated rubber, polysiloxane rubber, or EPDM like in the case of the second cooling roller 32 in the cooling device 21. The rubber roller 55 may be coated with the cushioning material on the substantially entire outer circumferential surface thereof, or rubber roller 55 itself may be substantially made from the cushioning material.

The rubber roller 55 presses the preprocessed sheet 14 sent from the preheating device 22 on the outer circumferential surface of the heating endless belt 57 to stick it thereon with heat. Namely the rubber roller 55 is provided so that the rubber roller 55 can contact the first heating roller 51 through the preheated preprocessed sheet 14 and the heating endless belt 57. The preprocessed sheet 14 runs in the state where the sheet 14 closely contacts the heating endless belt 57, and then runs being pressed and held by the fourth heating roller 54.

The guide roller 56 has an outer circumferential surface facing the outer circumferential surface of the heating endless belt 57 and is rotatably provided so as to guide a sheet 15 heated and pressed between the heating endless belt 57 and the fourth heating roller 54. Namely the guide roller 56 is positioned in the downstream side in the production flow from the fourth heating roller 54 through the second heating roller 52 in the downstream side in the production flow, namely in the direction in which the sheet 15 moves. With this arrangement, the guide roller 56 guides and peels off the sheet 15 heated and pressed between the heating endless belt 57 and the fourth heating roller 54 from the outer circumferential surface of the fourth heating roller 54 and then from the outer circumferential surface of the heating endless belt 57.

The cooling device 24 in the heat-treating device 3 cools the heat-treated sheet 15 in the main body 23 of the heat-treating device. This cooling device 24 includes, as shown in Fig. 1, a first cooling guide roller 61, a second cooling guide roller 62, and a pair of guide rollers 63, 63. As a material for these first cooling guide roller 61, second cooling guide roller 62, and the pair of guide rollers 63, 63, a material having thermal conductivity such as metal is used.

The first cooling guide roller 61 and the second cooling guide roller 62 are substantially arranged in line so that the sheet 15 treated in the main body 23 of the heat-treating device snake therethrough. A temperature adjuster not shown and based, for instance, on the vapor heating system or the like enabling adjustment of surface temperature is provided on each of the first cooling guide roller 61 and the second cooling guide roller 62. The configuration is not limited to that in which the temperature adjuster is provided directly on each of the rollers 61, 62, and also the configuration is allowable in which a roller dedicated to cooling is provided separately, or in which cooling is performed by an external cooling device.

The pair of guide rollers 63, 63 are positioned in the downstream side from the second cooling guide roller 63, 63 in the production flow. The guide rollers 63, 63 are adjacent in the vertical direction crossing the direction in which the sheet 15 moves so that outer circumferential surfaces of the rollers 63, 63 face each other and can hold the cooled sheet 15 therebetween.

The configuration of the cooling device 24 is not limited to that in which the rollers 61 to 63 are provided, and also the configuration is allowable in which one or a plurality of rollers are provided, or in which an endless belt is used so long as the sheet 15 can be cooled. (Operation of the production device for a synthetic resin sheet)

Next, operations for producing a synthetic resin sheet with the production device 1 according to the embodiment are described below.

At first, temperature is controlled by the temperature adjuster so that the temperature of the outer circumferential surfaces of the first metallic endless belt 36 and the third cooling roller 33 in the cooling device 21 of the preprocessed sheet molding device 2 is kept at no lower than the dew point of the molten resin 13 nor higher than to 50 °C. When the temperature is higher than 50 °C, the excellent transparency cannot be obtained, and therefore the temperature is kept not higher than 50 °C, and more preferably not higher than 30 °C. When the temperature is lower than the dew point, droplet spots are formed. In the main body 23 of the heat-treating device 3, temperature is controlled by the temperature adjuster so that temperature of the outer circumferential surface of the heating endless belt 57 or the fourth heating roller 54 is kept in the range from not lower than the softening point to not higher than the melting point of the preprocessed sheet 14. In the preheating device 22 in the heat-treating device 3, the temperature is preferably controlled so that the preprocessed sheet 14 is preheated at temperature not lower than 50 °C, namely the temperature at which the preprocessed sheet 14 is cooled by the cooling device 21 in the preprocessed sheet molding device 2 and not higher than the softening point thereof.

In this state, the molten resin 13 is extruded into a film form from the T die 12 of the T-die extrusion device 10, and is introduced to between the outer circumferential surface of the circulating first metallic endless belt 36 of the cooling device 21 and that of the rotating third cooling roller 33. When the molten resin 13 is introduced therein, the elastic material 38 is compressed and elastically deforms due to the pressure between the second cooling roller 32 and the third cooling roller 33. In this state, the molten resin 13 is held together with the first metallic endless belt 36 in a section defined by an angle θ1 from a center of the second cooling roller 32 as well as from a center of the third cooling roller 33 in which the elastic material 38 elastically deforms, and is flatly pressed due to the restoring force of the elastic material 38.

The surface pressure in this step is preferably in the range from 0.1 MPa to 20.0 MPa. When the surface pressure is lower than 0.1 MPa, air is involved in sections among the first metallic endless belt 36, third cooling roller 33, and molten resin 13, which may impair the appearance of the sheet. On the other hand, the surface pressure of 20.0 MPa or more is not preferable in view of service life of the first metallic endless belt 36. For the reasons described above, the pressure surface in flat pressing is set to the range from 0.1 MPa to 20.0 MPa.

Further, the molten resin 13 is cooled, while being flatly pressed, by the first metallic endless belt 36 and the third cooling roller 33 to 50 °C or below. Because of the operations for cooling and pressing between the second cooling roller 32 and the third cooling roller 33, the molten resin 13 is molded into sheet-formed resin 16 like a film while being moved.

Then the sheet-formed resin 16 moved to the downstream side in the production flow from the section between the second cooling roller 32 and the third cooling roller 33 and released from the flat pressing by the restoring force of the elastic material 38 goes around the outer circumferential surface of the third cooling roller 33 within the angle θ2 from the center thereof, and is further held, moved, and cooled between the first metallic endless belt 36 and the third cooling roller 33. Further this sheet-formed resin 16 is flatly pressed due to the tensile force acting to the first metallic endless belt 36 thorough the sheet-formed resin 16 by the third cooling roller 33 and is molded into the preprocessed sheet 14.

The surface pressure for the flat pressing in this zone is preferably in the range from 0.01 MPa to 0.5 MPa. When the surface pressure is lower than 0.01 MPa, control over the snaking movement of the first metallic endless belt 36 becomes difficult, which may affect stable production. On the other hand, the pressure surface higher than 0.5 MPa is not preferable in view of service life of the first metallic endless belt 36 because the tensile force acting to the first metallic endless belt 36 becomes higher. Therefore, the surface pressure for the flat pressing is set to the range from 0.01 MPa to 0.5 MPa.

Then the sheet is peeled off from the outer circumferential surface of the third cooling roller 33, and is cooled while being moved in contact with the first metallic endless belt 36. Then the cooled preprocessed sheet 14 is peeled off from the first metallic endless belt 36.

The preprocessed sheet 14 obtained as described above is quenched by the cooling device 21 so that the internal haze is 20% or below and the surface roughness Rmax of at least one surface thereof is 0.5 μm or below. The haze (loss of transparency) herein is obtained, as defined in JIS-K-7105, through the following equation from a ratio of the total light transmittance (Tt) indicating a total quantity of transmitted light when light is irradiated to the preprocessed sheet 14 and a diffused light transmittance (Td) diffused by and transmitted through the preprocessed sheet 14. It is to be noted that the total light transmittance (Tt) is a sum of the parallel light transmittance (Tp) indicating a quantity of light transmitted without losing the coaxial relation with the incident light, and the diffused light transmittance (Td).

$$\text{Haze (H)} = (\text{Td/Tt}) \times 100$$

The internal haze is obtained by measuring the transparency inside a sheet without being influenced by the surface roughness of the sheet, and is measured after silicone (trade name) is applied to a surface of the sheet. When the internal haze value is 20% or more, the internal haze becomes higher even when heated and flatly pressed in the main body 23 of the heat-treating device in the downstream, which may make it impossible to obtain a synthetic resin sheet with high transparency. On the other hand, when the surface roughness Rmax is higher than 0.5 $\mu$m, air is involved when the sheet is thermally stuck on the fourth heating roller 54 and the heating endless belt 57 in the main body 23 of the heat-treating device in the downstream, and the so-called blisters may be formed. For the reasons as described above, the preprocessed sheet 14 is molded so that the internal haze is 20% or below and the surface roughness Rmax is 0.5 $\mu$m or below.

Then the preprocessed sheet 14 quenched by the cooling device 21 is moved through and preheated on outer circumferential surfaces of the first preheating roller 41, the second preheating roller 42, and the third preheating roller 43 in the preheating device 22.

The preprocessed sheet 14 preheated by the preheating device 22 is introduced to between outer circumferential surfaces of the rubber roller 55 in the main body 23 of the heat-treating device and that of the heating endless belt 57. The introduced preprocessed sheet 14 is flatly pressed by the rubber roller 55 on the outer circumferential surface of the heating endless belt 57 and is thermally stuck therewith. The thermally stuck preprocessed sheet 14 is moved together with the circulating heating endless belt 57, and is introduced to between outer circumferential surfaces of the heating endless belt 57 and that of the fourth heating roller 54. The introduced preprocessed sheet 14 is flatly abutted thereon with the tensile force acted on the heating endless belt 57 by the fourth heating roller 54 with the preprocessed sheet 14 interposed therebetween due to the tensile force of the heating endless belt 57.

Then this sheet is peeled off from the outer circumferential surface of the fourth heating roller 54, and is heated while being moved in close contact with the heating endless belt 57. Then the heated sheet 18 is peeled off being guided by the guide roller 56 from the heating endless belt 57, thus the sheet 15 is obtained.

This sheet 15 is moved to snake through outer circumferential surfaces of the first cooling roller 61 and the second cooling guide roller 62 in the cooling device 24 so as to be cooled, and is sent out from between the pair of guide rollers 63, 63. The sent sheet is, for instance, wound up by a winder not shown.

(Advantages of the production device for a synthetic resin sheet)

With the embodiment described above, there are provided the advantages as described below.

(1) In the cooling device 21 in the preprocessed sheet molding device 2, the molten resin 13 introduced to between the first metallic endless belt 36 and the third cooling roller 33 is cooled, and simultaneously flatly pressed for mirror surface transfer without being excessively cooled and solidified before successful completion of the mirror surface transfer with the restoring force associated with elastic deformation of the elastic material 38 of the second cooling roller 32 between the first metallic endless belt 36 and the third cooling roller 33 each having a mirror-finished outer circumferential surface. Further, as the sheet-formed resin moves being held and pressed between the first metallic endless belt 36 and the cooling roller 33, the mirror surface transfer and the cooling are performed effectively, and even when the production speed is high, it is possible to produce the preprocessed sheet 14 with extremely small surface roughness and low haze. Then this preprocessed sheet 14 is thermally stuck on either one of the outer circumferential surfaces of the fourth heating roller 54 and the heating endless belt 57, then heated and flatly pressed between outer circumferential surfaces of the fourth heating roller 54 and the heating endless belt 57, and is peeled off from the fourth heating roller 54 and then from the heating endless belt 57 to obtain the sheet 15, so that the haze becomes further lower when obtained by using crystalline resin, and therefore the sheet 15 with high transparency and high rigidity can easily be produced at a high speed.

(2) The preprocessed sheet 14 is produced by quenching it so that the internal haze is 20% or below and the surface roughness of at least one surface thereof is 0.5 $\mu$m or below. Because of this feature, in the heat treatment performed in the downstream in the production flow, the sheet 15 with high transparency and high rigidity can be produced even at high speed without involving air between the preprocessed sheet 14 and the heating endless belt 57.

(3) The preprocessed sheet 14 is preheated, and then pressed to thermally stick on either one of the outer circumferential surfaces of the fourth heating roller 54 and the heating endless belt 57. Therefore rapid expansion due to rapid heating when the preprocessed sheet 14 is thermally stuck on the fourth heating roller 54 and the heating endless belt 57 can be suppressed, and crumples are not formed, and the sheet 15 with high transparency and high rigidity can be produced at a high speed.

(4) The cooled, pressed, and molded preprocessed sheet 14 is stuck on either one of the outer circumferential surfaces of the fourth heating roller 54 and the heating endless belt 57 by the rubber roller 55. Therefore, the sheet 15 having good appearance can be obtained at high speed without involving air between the preprocessed sheet 14 and the heating endless belt 57.

(Variants)

The present invention is not limited to the embodiment described above, and includes the variants described below within the range in which objects of the present invention can be achieved.

Namely, in the embodiment shown in Fig. 1, the preheating device 22 and the cooling device 24 are provided in the heat-treating device 3, but the present invention is applicable even when the preheating device 22 is not provided so long as influence by rapid heating never occurs like in the synthetic resin not generating rapid expansion even when rapidly heated. Further when a distance for winding up is sufficient for cooling, also the configuration is allowable in which the cooling device 24 is not provided.

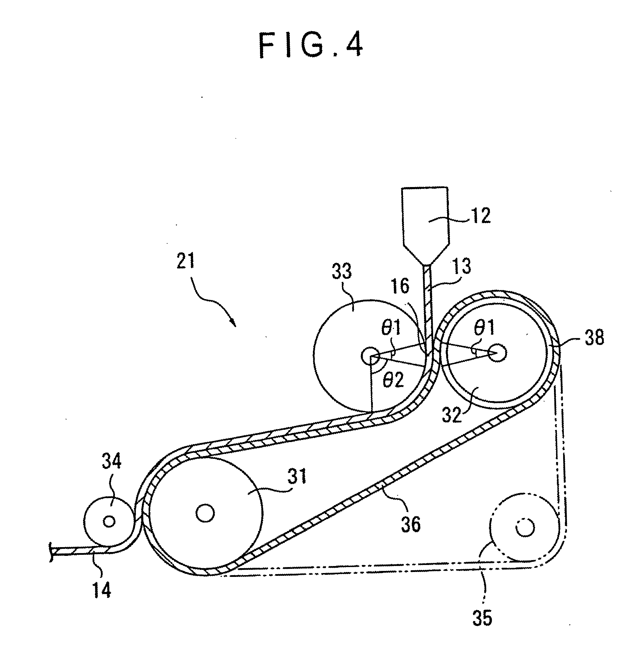

The descriptions of the cooling device 21 assume the configuration in which the fifth cooling roller 35 is provided in the cooling device 21 and the first metallic endless belt 36 is disposed around the first cooling roller 31, the second cooling roller 32, and the fifth cooling roller 35, but also the configuration is allowable, for instance, in which, as shown in Fig. 4, the fifth cooling roller is not provided, and the first metallic endless belt 36 is disposed only around the first cooling roller 31 and the second cooling roller 32, or in which more cooling rollers are provided and the first metallic endless belt 36 is disposed around the plurality of cooling rollers.

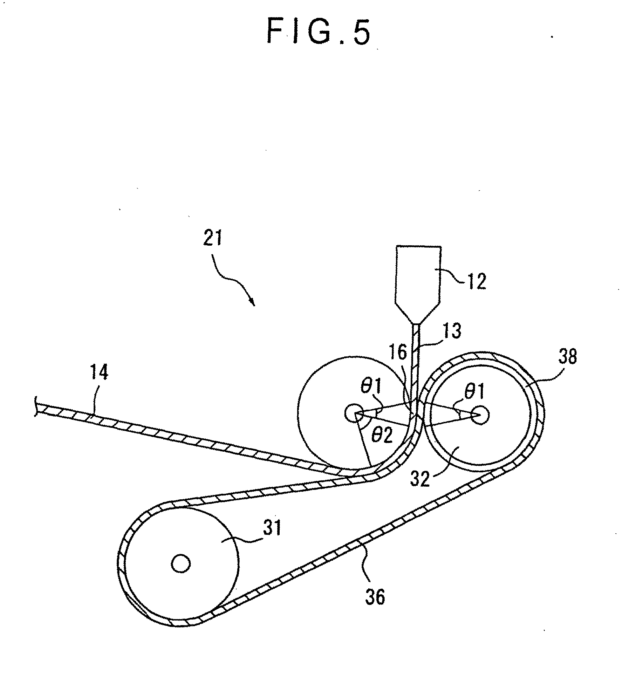

Further the descriptions above assume the configuration in which the preprocessed sheet 14 is peeled off from the first metallic endless belt 36 after having been peeled off from the third cooling roller 33, but if sufficient cooling can be carried out, also the configuration is allowable, for instance, in which, as shown in Fig. 5, the preprocessed sheet 14 is first peeled off from the first metallic endless belt 36 and then from the third cooling roller 33, or is peeled off simultaneously from the first metallic endless belt 36 and the third cooling roller 33.

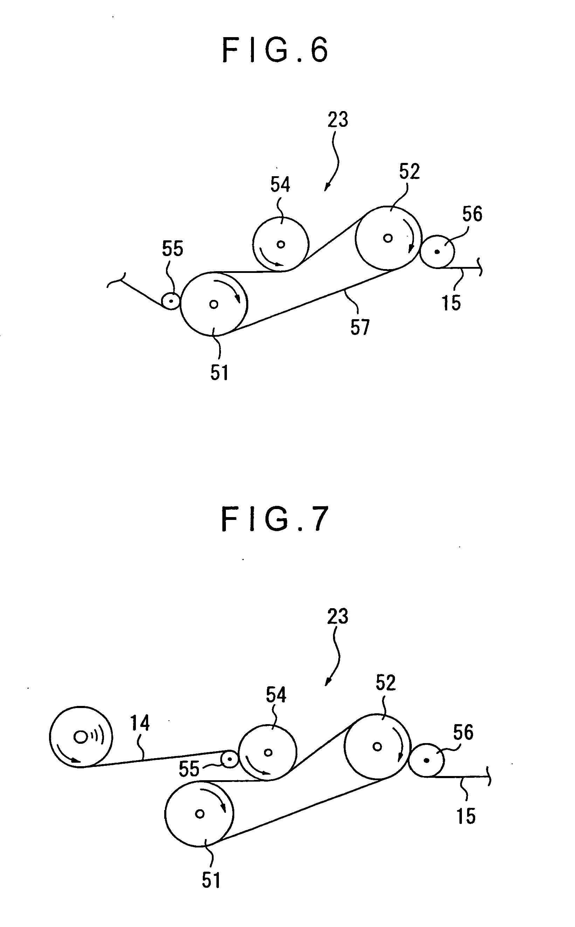

The descriptions of the main body 23 of the heat-treating device above assume the configuration in which the third heating roller 53 is provided, and the heating endless belt 57 is disposed around the first heating roller 51, the second heating roller 52, and the third heating roller 53, but also the configuration is allowable, for instance, in which, as shown in Fig. 6, in the third heating roller is not provided and the heating endless belt 57 is disposed around only the first heating roller 51 and the second heating roller 52, or in which further more heating rollers are provided and the heating endless belt 57 is disposed around the plurality of heating rollers.

The descriptions of the main body 23 of the heat-treating device above assume the configuration in which the preprocessed sheet 14 is thermally stuck on the heating endless belt 57 and then is flatly pressed being heated between the heating endless belt 57 and the fourth heating roller 54, but also the configuration is allowable, for instance, in which, as shown in Fig. 7, the preprocessed sheet 14 is first closely and thermally pressed to the fourth heating roller 54, and is then pressed into a sheet form being heated between the heating endless belt 57 and the fourth heating roller 54.

The descriptions above assume the configuration in which the preprocessed sheet 14 obtained in the cooling device 21 is directly preheated and then is heated and pressed into a sheet form in the main body 23 of the heat-treating device, but also the configuration is allowable, for instance, in which, as shown in Fig. 7, the preprocessed sheet 14 molded by the cooling device 21 is once wound up, and then wound-up preprocessed sheet 14 is wound off and is heated and flatly pressed by the heat-treating device 3.

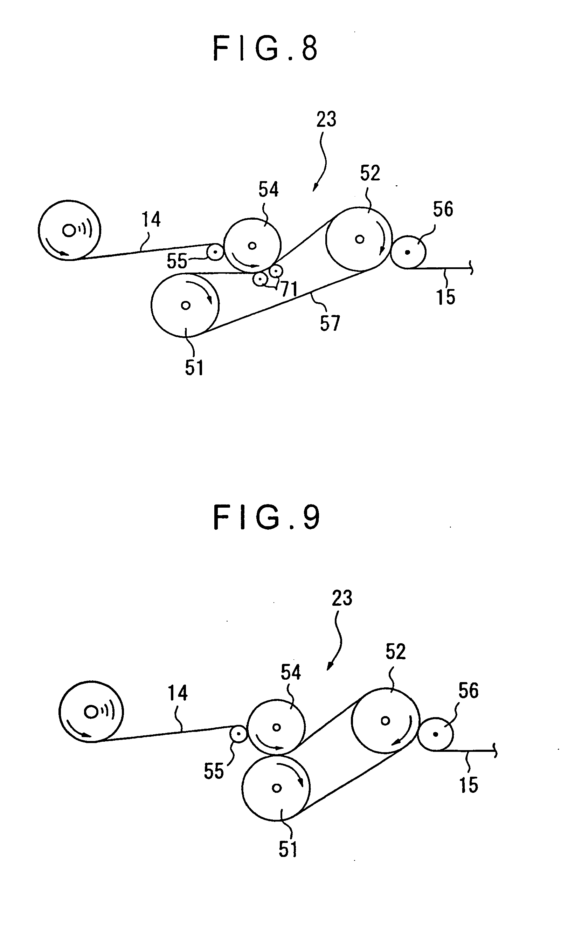

In the embodiment shown in Fig. 7, also the configuration is allowable in which, for the purpose to raise the pressure for pressing the preprocessed sheet into a sheet form between the fourth heating roller 54 and the heating endless belt 57, or to reduce the load applied to the heating endless belt 57 when the preprocessed sheet 14 is pressed into a sheet form, as shown in Fig. 8, a sub roller 71 facing via the heating endless belt 57 against the fourth heating roller 54 and holding and pressing the preprocessed sheet 14 with the heating endless belt 57 into a sheet form. The descriptions of the embodiment shown in Fig. 8 assume the configuration in which two sub rollers are employed, but also the configuration is allowable in which only one or two or more sub rollers are provided.

The descriptions of the embodiment shown in Fig. 7 assume the configuration in which the fourth heating roller 54 is provided between the first heating roller 51 and the second heating roller 52 around which the heating endless belt 57 is disposed, but also the configuration is allowable, for instance, in which, as shown in Fig. 9, the fourth heating roller 54 is provided at a position facing the first heating roller 51 in the state where the heating endless belt 57 and the preprocessed sheet 14 are held by and flatly pressed between the fourth heating roller 54 and the first heating roller 51 for processing the preprocessed sheet 14 in a sheet form. Further the second heating roller 52 may be employed in place of the fourth heating roller 54 and the first heating roller 51 for flatly pressing the preprocessed sheet form in the embodiment shown in Fig. 9.

[Second Embodiment]

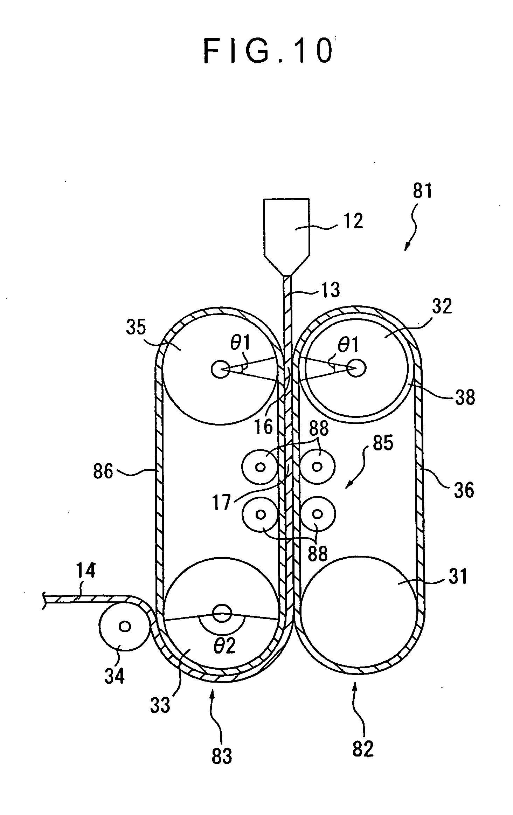

Production of a synthetic resin sheet according to a second embodiment of the present invention is described below with reference to Fig. 10. In the embodiment shown in Fig. 10, an endless belt is used for cooling and flatly pressing a preprocessed sheet in place of the third cooling roller 33 in the cooling device 21 employed in the embodiment shown in Fig. 1 through Fig. 3. In this embodiment shown in Fig. 10, the same reference numerals are assigned to the same components, and other portions of the configuration are the same as those in the embodiment shown in Fig. 3.

(Configuration of the production device for a synthetic resin sheet)

In Fig. 10, the reference numeral 81 indicates a cooling device, and this cooling device 81 includes a first belt section 82, a second belt section 83, a sub guide roller 34, a pressurizing section 85, and a driver not shown. The first belt section 82 includes a first cooling roller 31, a second cooling roller 32, and a metallic endless belt 36. The second belt section 83 includes a third cooling roller 33, a fourth cooling roller 35, and a second metallic endless belt 86. At least either one or preferably both outer circumferential surfaces of he first metallic endless belt 36 and the second metallic endless belt 86 are mirror-finished.
An outer circumferential surface of the second cooling roller 32 of the first belt section 82 is coated with the same elastic material 38 as that employed in the first embodiment shown in Fig. 1 through Fig. 3. The elastic material 38 may be provided on both of the second cooling roller 32 and the fourth cooling roller 35. Further a temperature adjuster not shown and based on a water-cooling system enabling adjustment of surface temperature is provided, like in the first embodiment, on each of the first cooling roller 31, the second cooling roller 32, the third cooling roller 33, and the fourth cooling roller 35.
The first metallic endless belt 36 and the second metallic endless belt 86 have the same form and are made from the same material respectively. The first metallic endless belt 36 is disposed around the first cooling roller 31 and the second cooling roller 32 so that the first metallic endless belt 36 can circulate thereon, while the second metallic endless belt 86 is disposed around the third cooling roller 33 and the fourth cooling roller 35 so that the second metallic endless belt 86 can circulate thereon.
Further the first metallic endless belt 36 and the second metallic endless belt 86 face each other in portions of the respective outer circumferential surfaces, and are disposed around so that the molten resin 13 extruded from a T die 12 and pressed into a film form can be held therebetween. Namely the first belt section 82 and the second belt section 83 are arranged so that the molten resin 13 is held together with the first metallic endless belt 36 and the second metallic endless belt 86 between the outer circumferential surfaces of the second cooling roller 32 and the fourth cooling roller 35 and also between the outer circumferential surfaces of the first cooling roller 31 and the third cooling roller 33.
The driver is connected to at least one of the first cooling roller 31, the second cooling roller 32, the third cooling roller 33, and the fourth cooling roller 35. When driven by the driver, the first metallic endless belt 36 and the second metallic endless belt 86 are run simultaneously, but in reverse directions at the substantially same speed respectively.
The sub guide roller 34 is rotatably provided in the state where an outer circumferential surface thereof faces an outer circumferential surface of the second metallic endless belt 86, and guides sheet-formed resin cooled and flatly pressed between the first metallic endless belt 36 and the second metallic endless belt 86. The sub guide roller 34 may be provided with the outer circumferential surface thereof spaced from the second metallic endless belt 86. Further a temperature adjuster not shown may be provided on the sub guide roller 34, or the outer circumferential surface may be mirror-finished.
The pressurizing section 85 is provided in the zone in which the first metallic endless belt 36 and the second metallic endless belt 86 run concurrently, and two pairs of pressurizing rollers 88 are provided therein. The pressurizing rollers 88 are provided, like the first cooling roller 31 and third cooling roller 33, or the second cooling roller 32 and fourth cooling roller 35, so that sheet-formed resin is held together with the first metallic endless belt 36 and the second metallic endless belt 86 between outer circumferential surface thereof and the pressure acts in the direction in which the first metallic endless belt 36 and the second metallic endless belt 86 get closer to each other.

(Operations of the production device for a synthetic resin sheet)

Operations in production of a synthetic resin sheet with the production device according to the embodiment above are described below.
At first, the temperature adjuster provides temperature control so that temperature at outer circumferential surfaces of the first metallic endless belt 36 and second metallic endless belt 86 in the cooling device 81 is kept at no lower than the dew point of the molten resin 13 nor higher than 50 °C. Further, like in the first embodiment, preheating and heating are performed with the preheating device 22 and the main body 23 of the heat-treating device.
In this state, the molten resin 13 is extruded into a film form from the T die 12 in the T-die extrusion device 10, and is introduced between outer circumferential surfaces of the first metallic endless belt 36 and the second metallic endless belt 86 each circulating in the cooling device 21. The molten resin 13 is held together with the first metallic endless belt 36 and the second metallic endless belt 86 and pressed into a sheet-form by the second cooling roller 32 with the deformed elastic material 38 and the fourth cooling roller 35 in the angular section of 01 from the centers of the second cooling roller 32 and the fourth cooling roller 35 due to the restoring force of the elastic material 38. The surface pressure for flatly pressing the resin is preferably in the range from 0.1 MPa to 20.0 MPa like in the first embodiment.

Further the molten resin 13 is cooled by the first metallic endless belt 36 and the second metallic endless belt 86 to 50 °C or below while being pressed into a sheet form. With the operations for cooling and pressing into a sheet form the molten resin 13 between the second cooling roller 32 and the fourth cooling roller 35, the molten resin 13 is molded to a sheet-formed resin 16 while being moved.

The sheet-formed resin 16 having been moved from the section between the second cooling roller 32 and the fourth cooling roller 35 to the downstream side in the production flow and released from the flatly pressed state due to the restoring force of the elastic material 38 is moved while being cooled between the first metallic endless belt 36 and the second metallic endless belt 86 circulating concurrently, and the held state is maintained by the pressurizing section 85. Namely, the sheet-formed resin 16 is held together with the first metallic endless belt 36 and the second metallic endless belt 86 between outer circumferential surfaces of the pressurizing rollers 88, 88 and is pressed into a sheet form. The surface pressure of this pressurizing section 85 is, like in the first embodiment, preferably in the range from 0.01 MPa to 0.5 MPa.

Further the sheet-formed resin 16 is cooled while being moved between the first cooling roller 31 and the third cooling roller 33. Further, the sheet-formed resin 16 is wound around the outer circumferential surface of the third cooling roller 33 in the angular range of θ2 from the center of the third cooling roller 33 and is further cooled by the outer circumferential surface of the second metallic endless belt 86. Then the sheet-formed resin 16 cooled as described above is peeled off by the sub guide roller 34 from the outer circumferential surface of the second metallic endless belt 86, and then sent to the preheating device 22 of the heat-treating device 3, main body 23 of the heat-treating device, and cooling device 24 in the downstream successively to be molded into the sheet 15.

(Advantages of the production device for a synthetic resin sheet)

Also in the embodiment shown in Fig. 10, like in the first embodiment, the cooling and the transfer of a mirror surface by flatly pressing are carried out simultaneously, so that, even in production at a high speed, the sheet 15 with extremely low surface roughness and the haze suppressed can be obtained.

Further operations for cooling and pressing into a sheet form are carried out between the first metallic endless belt 36 and the second metallic endless belt 86 forming a pair, so that the state in which the sheet is cooled and pressed into a sheet form is maintained for a long period of time, and therefore the sheet 15 with high transparency and high rigidity can be obtained further efficiently at a high speed.

(Variants)

The present invention is not limited to the embodiments described above, and the following variants are included within this invention in the range in which the objects of the present invention as described above can be achieved.

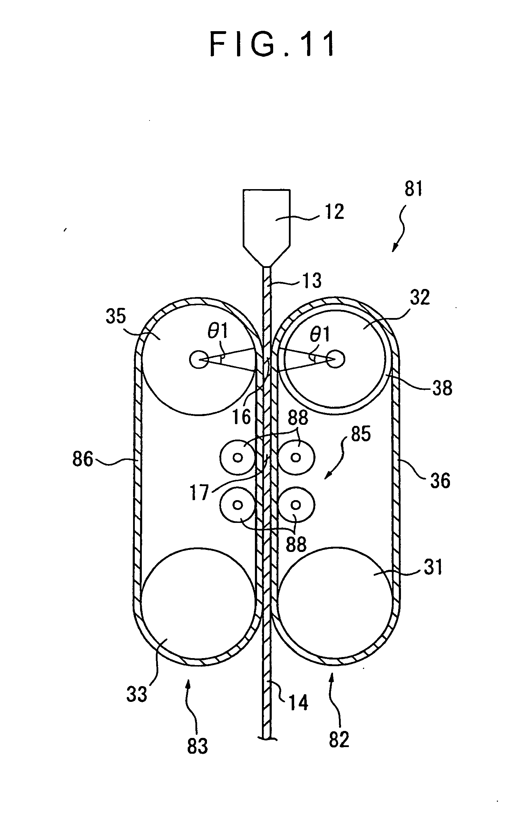

Namely descriptions of the embodiment shown in Fig. 10 assume the configuration in which the sub guide roller 34 is provided, and the sheet is moved and cooled, after flatly pressed, in the state where the sheet is stuck on the outer circumferential surface of the second metallic endless belt 86 and then peeled off therefrom, but also the configuration is allowable, for instance, in which, as shown in Fig. 11, the sub guide roller 34 is not provided, and the sheet is sent out, when having been cooled and flatly pressed, as it is to the downstream side.

Further in the embodiment shown in Fig. 10 or in that shown in Fig. 11, also the configuration is allowable, for instance, in which a plurality of pressurizing rollers 88 are provided in the staggered state and the first metallic endless belt 36 and the second metallic endless belt 86 with the sheet-formed resin 16 placed therebetween are moved in the flexuous state to cool and flatly press the sheet-formed resin 16.

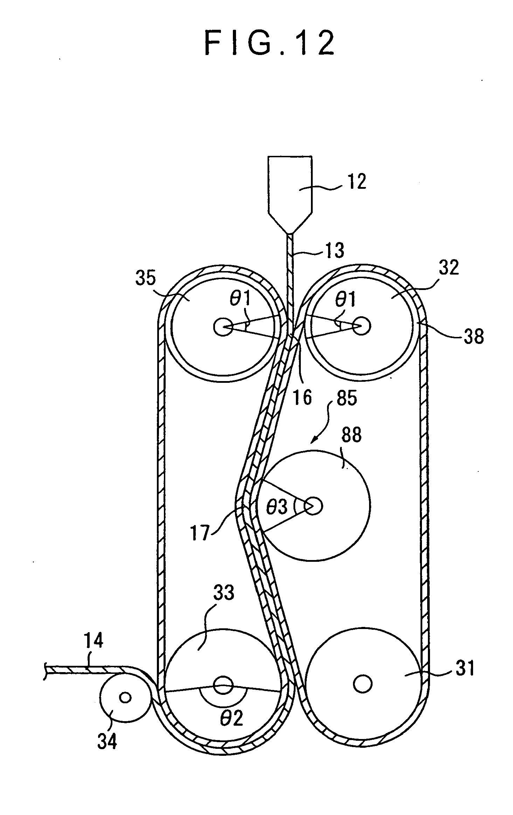

The descriptions above assume the configuration in which the sheet-formed resin 16 placed between the first metallic endless belt 36 and the second metallic endless belt 86 is positioned between pressurizing rollers forming a pair as a pressurizing section and is flatly pressed a sheet form together with the first metallic endless belt 36 and the second metallic endless belt 86, but also the configuration is allowable, for instance, in which only one pressurizing roller 88 is used as shown in Fig. 12.

Namely, in this embodiment shown in Fig. 12, like the fourth cooling roller 35 according to the second embodiment, the pressurizing roller 88 is rotatably provided with the outer circumferential surface thereof intersecting with the external tangent lines for the third cooling roller 33 and the fourth cooling roller 35 in the state where the sheet-formed resin 16 is held between the outer circumferential surface and the outer circumferential surface of the second metallic endless belt 86 via the first metallic endless belt 36. The first metallic endless belt 36 and the second metallic endless belt 86 with the sheet-formed resin 16 are wound around the outer circumferential surface of the pressurizing roller 88 in the angular section of θ3 from the center of the pressurizing roller 88, and the sheet-formed resin 16 is cooled between the outer circumferential surfaces of the first metallic endless belt 36 and the second metallic endless belt 86 and the outer circumferential surface of the pressurizing roller 88 and is flatly pressed due to the tensile force acting over the first metallic endless belt 36 and the second metallic endless belt 86, thus the sheet-formed resin 16 being formed into the preprocessed sheet 14. Also in this case, the surface pressure is preferably in the range from 0.01 MPa to 0.5 MPa.

The specific structures and procedures for carrying out the present invention may be changed to other ones according to the necessity within the range in which the objects of the present invention can be achieved.

[Example]

A result of an experiment examining various production methods for producing various types of synthetic resin sheets is described below. The production method and production method are as set below.

(Production device and conditions for production)

The production device 1 shown in Fig. 1 through Fig. 3 was used as the test device.

| | |
|---|---|
| Cylinder diameter of extrusion device 11: | 150 mm |
| Width of T die 12: | 1650 mm |
| Surface roughness Rmax of the cooling device: | |
| Metallic belt: | 0.2 $\mu$m |
| Third cooling roller: | 0.1 $\mu$m |
| Synthetic resin: | Idemitsu Polypro E-304GP |
| (Trade name, produced by Idemitsu Petrochemical Co., Ltd., Homo Polypropylene, MI = 2.8 g/10 min) | |
| Thickness of product sheet: | 0.3 mm |
| Production speed: | 15 m/min., 25 m/min. |

(Production method)

(Example 1)

Surface temperatures of the third cooling roller 33 and the first metallic endless belt 36 in the cooling device 21 were set to 20 °C, and the preprocessed sheet 14 was preheated to 120 °C by the preheating device 22, while surface temperature of the heating endless belt 57 in the main body 23 of the heat-treating device was set to 145 °C. The preprocessed sheet 14 was thermally stuck thereon, and then flatly pressed while being heated between the fourth heating roller 54 heated to about 100 °C and the heating endless belt 57 for the heat treatment, and was then cooled to obtain the sheet 15.

(Example 2)

The preprocessed sheet molded by the cooling device 21 as described above in Example 1 was once wound up, then the wound-up preprocessed sheet 14 was preheated with the preheating device 22 as in Example 1, flatly pressed while being heated by the main body 23 of the heating processing device, and then cooled to obtain the sheet 15.

(Example 3)

Production was made as described above except the use of an embossed roller with the surface roughness Rmax of 0.7 $\mu$m as the third cooling roller in the cooling device 21 in Example 1.

(Comparative Example 1)

A preprocessed sheet obtained by removing moisture with a water-absorbing roller from a film-formed resin sheet obtained by the water cooling method based on the conventional technology was preheated by the preheating device 22 described in Example 1, and then was flatly pressed while being heated, and then the preprocessed sheet was cooled to obtain a sheet.

(Comparative Example 2)

A preprocessed sheet obtained by the air knife method in which molten resin extruded from a conventional type of die is cooled with an air knife and a cooling roller was preheated by the preheating device 22 in Example 1 above, and was flatly pressed in the main body 23 of the heat-treating device while being heated, and then was cooled to obtain a sheet.

(Comparative Example 3)

A preprocessed sheet obtained by molding molten resin with the cooling device 21 in Example 1.

(Detail of the experiment)

For each of the preprocessed sheets obtained in Examples 1 to 3 and Comparative Examples 1 to 3, the surface roughness before the heat treatment, as well as the surface roughness, the internal haze, and the tensile elasticity modulus as an index for rigidity after the heat treatment were measured respectively. Further whether the blister was formed during the production process or not was observed. A result of the experiment is shown in Table 1 and Table 2.
A haze measurement device (such as, for instance, NDH-300A, produced by
Nippon Denshoku Industries CO. Ltd.) was used for measurement of the internal haze, and the measurement values were calculated, as described above, through the equation of (Haze = (Td/Tt) x 100). Further the tensile elasticity modulus was measured by the method based on JIS K-7113.

(Result of experiment)

A result of the experiment is shown in Table 1 and Table 2, and is described below.

(Table 1)

| | Surface roughness of quenched preprocessed sheet [μm] (belt side/roller side) | Low-speed production (15m/min.) | | | | High-speed production (25m/min.) | | | |
|---|---|---|---|---|---|---|---|---|---|
| | | Blister formation Yes/No | Surface roughness Rmax [μm] | Product total haze [%] | Product tensile elasticity (rigidity) [MPa] | Blister formation Yes/No | Surface roughness Rmax [μm] | Product total haze [%] | Product tensile elasticity (rigidity) [MPa] |
| Example 1 | 0.23/0.20 | N | 0.20/0.20 | 3.2 | 2,200 | N | 0.20/0.21 | 3.3 | 2,200 |
| Example 2 | 0.23/0.20 | N | 0.20/0.20 | 3.1 | 2,200 | N | 0.21/0.20 | 3.1 | 2,100 |
| Example 3 | 0.23/0.40 | N | 0.20/0.25 | 3.7 | 2,200 | N | 0.21/0.25 | 3.7 | 2,200 |
| Comparative Example 1 | 0.55/0.60 | N | 0.24/0.20 | 3.2 | 2,200 | Y | Non-product | Non-product | Non-product |
| Comparative Example 2 | 1.08/1.10 | Y | Non-product | Non-product | Non-product | Y | Non-product | Non-product | Non-product |

(Table 2)

| | Low-speed production (15m/min.) | | | High-speed production (25m/min.) | | |
|---|---|---|---|---|---|---|
| | Surface roughness Rmax [μm] | Product total haze [%] | Product tensile elasticity (rigidity) [MPa] | Surface roughness Rmax [μm] | Product total haze [%] | Product tensile elasticity (rigidity) [MPa] |
| Comparative Example 3 | 0.20/0.23 | 3.2 | 1,100 | 0.20/0.23 | 3.1 | 1,200 |

When only the preprocessed sheet according to the present invention is produced, the physical properties of the product sheet, namely the transparency (haze) and the surface roughness of the product sheet are excellent in both low-speed production and high-speed production as shown in Comparative Example 3 in Table 2. However, the rigidity of the product sheet is very low, i.e., in the range from 1100 to 1200 MPa, and there is a limit in application thereof as a transparent polypropylene sheet.

When the preprocessed sheet produced by using an air knife as shown in Comparative Example 2 in Table 1 was heat-treated, blisters were formed, and a thermally processed sheet available as a product sheet could not be obtained.

When the water-cooled preprocessed sheet in Comparative Example 1 was used, a production sheet with high transparency (low haze), low surface roughness, and high rigidity could be obtained at the production speed of 15 m/min. However, when the production speed was 25 m/min., blisters were formed, and a sheet available as a product could not be obtained, so that the productivity was quite low.

In contrast, in Examples 1 to 3, even at the production speed of 25 m/min., the transparent (haze) was excellent and the surface roughness was small, and the rigidity was in the range from 2100 to 2200 MPa, which was about 2 times higher than that of the preprocessed sheet.

Therefore, with the present invention, the production cost is reduced with the productivity improved, and it is advantageous in that, for instance, when the obtained sheet is used to produce a bent container, the sheet thickness can be reduced.

## Industrial Availability

The present invention can be applied to a crystalline transparent resin sheet with high transparency and high rigidity as well as to production of the same, and is applicable to such applications as various packages for packaging, other types of resin films, resin sheets, and the like.

## Claims

1. A production method of a highly-rigid synthetic resin sheet comprising the steps of:

   obtaining a preprocessed sheet (14) by introducing into and pressing molten crystalline resin (13) between a first metallic endless belt(36) that is disposed around a first cooling roller (31) and a second cooling roller(32) with the outer circumferential surface thereof coated with an elastic material (38) so that the belt can circulate and a third cooling roller (33) that faces the second cooling roller through the first metallic endless belt, at least either one the outer circumferential surfaces of which is a mirror surface, and holding and moving the introduced molten crystalline resin between the first metallic endless belt and the third cooling roller for quenching the sheet, the preprocessed sheet exhibiting an internal haze of 20% or below and a surface roughness Rmax of 0.5 $\mu$m or below; and
   heat treating the preprocessed sheet by pressing the sheet on either one of the outer circumferential surfaces of a heated roller (51) and a metallic heating endless belt (57) to thermally stick the sheet thereon, moving the thermally stuck sheet between the outer circumferential surfaces of the heated roller and the heating endless belt, and peeling off this sheet from the outer circumferential surface of the heated roller and then from the outer circumferential surface of the heating endless belt.

2. The production method of a highly-rigid synthetic resin sheet according to claim 1, further comprising:

   providing a fourth cooling roller and a second metallic endless belt that is disposed around the third cooling roller and the fourth cooling roller so that the second endless belt can circulate in the direction reverse to that in which the first metallic endless belt circulates and is provided with the outer circumferential surface facing the outer circumferential surface of the first metallic endless belt, wherein the molten crystalline resin is introduced between the first metallic endless belt and the second metallic endless belt while pressed together with the first metallic endless belt and the second metallic endless belt between the second cooling roller and the third cooling roller for quenching the sheet.

3. The production method of a highly-rigid synthetic resin sheet according to claim 1 or claim 2, wherein the step of obtaining the preprocessed sheet and the heat treatment step are carried out successively.

4. The production method of a highly-rigid synthetic resin sheet according to claim 1 or claim 2, wherein the preprocessed sheet obtained in the step of obtaining the preprocessed sheet is wound up, and then the wound-up preprocessed sheet is wound off and heat treated.

5. The production method of a highly-rigid synthetic resin sheet according to any of claims 1 through 4, wherein the preprocessed sheet is preheated and then pressed on either one of the outer circumferential surfaces of the heated roller or the heating endless belt to be thermally stuck thereon.

6. The production method of a highly-rigid synthetic resin sheet according to any of claims 1 through 5, wherein the resin is polypropylene-based resin.

7. A highly-rigid synthetic resin sheet obtained by the production method as described in any of claims 1 through 6.

8. A production device (1) for a highly-rigid synthetic resin sheet comprising:

a preprocessed sheet production device (2) for molding a preprocessed sheet (14) including: a T-die extrusion device (10) ; a pressure section (21) having a first cooling roller(31), a second cooling roller (32) with the outer circumferential surface coated with an elastic material (38), a first metallic endless belt (36) disposed around the first cooling roller and the second cooling roller, and a third cooling roller (33) provided so that molten resin (13) can be introduced to between the outer circumferential surface thereof and the outer circumferential surface of the first metallic endless belt, at least either one of the outer circumferential surfaces of which is a mirror surface, the pressure section pressing the introduced molten resin together with the first metallic endless belt between the second cooling roller and the third cooling roller; and a section for holding and moving the resin between the first metallic endless belt and the third cooling roller; and
a heat-treating device (3) including a heated roller (51), and a metallic heating endless belt (57) heated and provided with the outer circumferential surface thereof to face the outer circumferential surface of the roller so that the belt can circulate, the heat-treating device being adapted to thermally stick the preprocessed sheet produced by the preprocessed sheet production device on either one of the outer circumferential surfaces of the roller and the heating endless belt, moving the sheet between the outer circumferential surfaces of the roller and the heating endless belt, and peeling off the sheet from the outer circumferential surface of the roller and then from the outer circumferential surface of the heating endless belt.

9. The production device for a synthetic resin sheet according to claim 8, further comprising:

a fourth roller; and
a second metallic endless belt that is disposed around the third cooling roller and the fourth cooling roller so that the second endless belt can circulate in the direction reverse to that in which the first metallic endless belt circulates and is provided with the outer circumferential surface facing the outer circumferential surface of the first metallic endless belt, wherein
the molten crystalline resin is introduced between the first metallic endless belt and the second metallic endless belt while pressed together with the first metallic endless belt and the second metallic endless belt between the second cooling roller and the third cooling roller for quenching the sheet.

10. The production device for a highly-rigid synthetic resin sheet according to claim 8 or claim 9, further comprising a preheating device provided between the preprocessed sheet production device and the heat-treating device so as to preheat the preprocessed sheet molded by the preprocessed sheet production device before the sheet is stuck on either one of the outer circumferential surfaces of the roller and the heating endless belt in the heat-treating device.

11. The production device for a highly-rigid synthetic resin sheet according to any of claims 8 to 10, wherein the heat-treating device comprising an elastic roller for temporally welding and thermally sticking the preprocessed sheet on either one of the outer circumferential surfaces of the roller and the heating endless belt to thermally stick the sheet thereon.

**Patentansprüche**

1. Verfahren zur Herstellung einer hochsteifen Kunstharzfolie, das folgende Schritte umfasst:

Erhalten einer vorverarbeiteten Folie (14) durch Einführen und Pressen von schmelzflüssigem kristallinen Harz (13) zwischen einem ersten metallischen Endlosband (36), das um eine erste Kühlwalze (31) und eine zweite Kühlwalze (32) herum angeordnet ist, deren äußere Umfangsfläche davon mit einem elastischen Material (38) beschichtet ist, sodass das Band umlaufen kann und eine dritte Kühlwalze (33), die der zweiten Kühlwalze durch das erste metallische Endlosband gegenüberliegt, wobei zumindest eine von beiden der äußeren Umfangsflächen davon eine Spiegelfläche ist und Halten und Bewegen des eingeführten schmelzflüssigen kristallinen Harzes zwischen dem ersten metallischen Endlosband und der dritten Kühlwalze zum Abschrecken der Folie, wobei die vorverarbeitete Folie eine innere Trübung von 20% oder darunter und eine Oberflächenrauheit Rmax von 0,5 μm oder darunter zeigt; und

Wärmebehandlung der vorverarbeiteten Folie durch Pressen der Folie auf eine von beiden der äußeren Umfangsflächen einer beheizten Walze (51) und einem metallischen beheizten Endlosband (57), um die Folie thermisch daran anzuhaften, Bewegen der thermisch angehafteten Folie zwischen den äußeren Umfangsflächen der beheizten Walze und des beheizten Endlosbands und Ablösen dieser Folie von der äußeren Umfangsfläche der beheizten Walze und danach von der äußeren Umfangsfläche des beheizten Endlosbands.

2. Verfahren zur Herstellung einer hochsteifen Kunstharzfolie nach Anspruch 1, das weiter umfasst:

Bereitstellen einer vierten Kühlwalze und eines zweiten metallischen Endlosbands, das um die dritte Kühlwalze und die vierte Kühlwalze herum angeordnet ist, sodass das zweite Endlosband in umgekehrter Richtung zu jener umlaufen kann, in der das erste metallische Endlosband umläuft und so bereitgestellt ist, dass die äußere Umfangsfläche der äußeren Umfangsfläche des ersten metallischen Endlosbands gegenüberliegt, wobei das schmelzflüssige kristalline Harz zwischen das erste metallische Endlosband und das zweite metallische Endlosband eingeführt wird, während es mit dem ersten metallischen Endlosband und dem zweiten metallischen Endlosband zwischen der zweiten Kühlwalze und der dritten Kühlwalze zum Abschrecken der Folie zusammengepresst wird.

3. Verfahren zur Herstellung einer hochsteifen Kunstharzfolie nach Anspruch 1 oder Anspruch 2, wobei der Schritt Erhalten der vorverarbeiteten Folie und der Wärmebehandlungsschritt aufeinanderfolgend ausgeführt werden.

4. Verfahren zur Herstellung einer hochsteifen Kunstharzfolie nach Anspruch 1 oder Anspruch 2, wobei die vorverarbeitete Folie, die beim Schritt des Erhaltens der vorverarbeiteten Folie erhalten wurde, aufgewickelt wird und die aufgewickelte vorverarbeitete Folie danach abgewickelt und wärmebehandelt wird.

5. Verfahren zur Herstellung einer hochsteifen Kunstharzfolie nach einem beliebigen der Ansprüche 1 bis 4, wobei die vorverarbeitete Folie vorgewärmt und danach auf eine von beiden der äußeren Umfangsflächen der beheizten Walze oder des erhitzenden Endlosbands gepresst wird, um thermisch daran angehaftet zu werden.

6. Verfahren zur Herstellung einer hochsteifen Kunstharzfolie nach einem beliebigen der Ansprüche 1 bis 5, wobei das Harz ein polypropylenbasiertes Harz ist.

7. Hochsteife Kunstharzfolie, die durch das in einem beliebigen der Ansprüche 1 bis 6 beschriebene Herstellungsverfahren erhalten wurde.

8. Vorrichtung (1) zur Herstellung einer hochsteifen Kunstharzfolie, umfassend:

eine Vorrichtung (2) zur Herstellung einer vorverarbeiteten Folie, um eine vorverarbeitete Folie (14) zu molden, einschließend: eine T-Düsenvorrichtung (10); einen Druckteil (21) mit einer ersten Kühlwalze (31), einer zweiten Kühlwalze (32) deren äußere Umfangsfläche mit einem elastischen Material (38) beschichtet ist, ein erstes metallisches Endlosband (36), das um eine erste Kühlwalze und die zweite Kühlwalze herum angeordnet ist und eine dritte Kühlwalze (33) bereitgestellt ist, sodass schmelzflüssiges Harz (13) zwischen die äußere Umfangsfläche davon und die äußere Umfangsfläche des ersten metallischen Endlosbands eingeführt werden kann, wobei zumindest eine von beiden der äußeren Umfangsflächen eine Spiegelfläche ist, der Druckteil das eingeführte schmelzflüssige Harz zusammen mit dem ersten metallischen Endlosband zwischen die zweite Kühlwalze und die dritte Kühlwalze presst; und einen Teil zum Halten und Bewegen des Harzes zwischen dem ersten metallischen Endlosband und der dritten Kühlwalze; und

eine Wärmebehandlungsvorrichtung (3), die eine beheizte Walze (51) und ein metallisches erhitzendes Endlosband (57) einschließt, das beheizt ist und mit der äußeren Umfangsfläche davon bereitgestellt ist, der äußeren Umfangsfläche der Walze gegenüberzuliegen, sodass das Endlosband umlaufen kann, wobei die Wärmebehandlungsvorrichtung angepasst ist, die von der Vorrichtung zur Herstellung der vorverarbeiteten Folie hergestellte vorverarbeitete Folie thermisch an eine von beiden der äußeren Umfangsflächen der Walze und dem erhitzenden Endlosband anzuhaften, Bewegen der Folie zwischen den äußeren Umfangsflächen der Walze und dem erhitzenden Endlosband und Ablösen der Folie von der äußeren Umfangsfläche der Walze und danach von der äußeren Umfangsfläche des erhitzenden Endlosbands.

9. Vorrichtung zur Herstellung einer Kunstharzfolie nach Anspruch 8, die weiter umfasst:

eine vierte Walze; und

ein zweites metallisches Endlosband, das um die dritte Kühlwalze und die vierte Kühlwalze herum angeordnet ist, sodass das zweite Endlosband in umgekehrter Richtung zu jener umlaufen kann, in der das erste metallische Endlosband umläuft und mit der äußeren Umfangsfläche dem ersten metallischen Endlosband gegenüberliegend bereitgestellt ist, wobei

das schmelzflüssige kristalline Harz zwischen das erste metallische Endlosband und das zweite metallische Endlosband eingeführt wird, während es mit dem ersten metallischen Endlosband und dem zweiten metallischen Endlosband zwischen der zweiten Kühlwalze und der dritten Kühlwalze zum Abschrecken der Folie zusammengepresst wird.

**10.** Vorrichtung zur Herstellung einer hochsteifen Kunstharzfolie nach Anspruch 8 oder Anspruch 9, die weiter eine Vorwärmungsvorrichtung umfasst, die zwischen der Vorrichtung zur Herstellung der vorverarbeiteten Folie und der Wärmebehandlungsvorrichtung bereitgestellt ist, um die vorverarbeitete Folie vorzuwärmen, die von der Vorrichtung zur Herstellung der vorverarbeiteten Folie gemoldet wurde, bevor die Folie an eine von beiden der äußeren Umfangsflächen der Walze und des erhitzenden Endlosbands in der Wärmebehandlungsvorrichtung angehaftet wird.

**11.** Vorrichtung zur Herstellung einer hochsteifen Kunstharzfolie nach einem beliebigen der Ansprüche 8 bis 10, wobei die Wärmebehandlungsvorrichtung eine elastische Walze umfasst, um die vorverarbeitete Folie vorübergehend zu schweißen und thermisch an eine von beiden der äußeren Umfangsflächen der Walze und des erhitzenden Endlosbands anzuhaften, um die Folie daran anzuhaften.

**Revendications**

**1.** Procédé de fabrication d'une feuille de résine synthétique très rigide comprenant les étapes consistant à :

obtenir une feuille prétraitée (14) en introduisant dans et en compressant la résine cristalline fondue (13) entre une première courroie sans fin métallique (36) qui est disposée autour d'un premier rouleau de refroidissement (31) et un deuxième rouleau de refroidissement (32) avec sa surface circonférentielle externe recouverte d'une matière élastique (38) pour que la courroie puisse circuler et un troisième rouleau de refroidissement (33) faisant face au deuxième rouleau de refroidissement par l'intermédiaire de la première courroie sans fin métallique, dont au moins l'une des surfaces circonférentielles externes est une surface de miroir et en maintenant et en déplaçant la résine cristalline fondue entre la première courroie sans fin métallique et le troisième rouleau de refroidissement pour tremper la feuille, la feuille prétraitée présentant un trouble intérieur de 20% ou inférieur et une rugosité de surface Rmax de 0,5 $\mu$m ou inférieure ; et

traiter thermiquement la feuille prétraitée en compressant la feuille sur l'une des surfaces circonférentielles externes d'un rouleau chauffé (51) et d'une courroie sans fin métallique chauffante (57) pour coller thermiquement la feuille sur celles-ci, pour déplacer la feuille collée thermiquement entre les surfaces circonférentielles externes du rouleau chauffé et de la courroie sans fin chauffante et pour décoller cette feuille de la surface circonférentielle externe du rouleau chauffé et ensuite de la surface circonférentielle externe de la courroie sans fin chauffante.

**2.** Procédé de fabrication d'une résine synthétique très rigide selon la revendication 1, comprenant en outre les étapes consistant à :

introduire un quatrième rouleau de refroidissement et une deuxième courroie sans fin métallique qui est disposée autour du troisième rouleau de refroidissement et du quatrième rouleau de refroidissement pour que la deuxième courroie sans fin puisse circuler dans le sens inverse du sens de circulation de la première courroie sans fin métallique et qu'elle soit introduite avec la surface circonférentielle externe faisant face à la surface circonférentielle externe de la première courroie sans fin métallique, dans lequel la résine cristalline fondue est introduite entre la première courroie sans fin métallique et la deuxième courroie sans fin métallique tandis qu'elle est compressée avec la première courroie sans fin métallique et la deuxième courroie sans fin métallique entre le deuxième rouleau de refroidissement et le troisième rouleau de refroidissement pour tremper la feuille.

**3.** Procédé de fabrication d'une feuille synthétique très rigide selon la revendication 1 ou la revendication 2, dans lequel l'étape d'obtention de la feuille prétraitée et l'étape de traitement thermique sont réalisés successivement.

**4.** Procédé de fabrication d'une feuille de résine synthétique très rigide selon la revendication 1 ou la revendication 2, dans lequel la feuille prétraitée obtenue à l'étape d'obtention de la feuille prétraitée est enroulée, et la feuille prétraitée enroulée est ensuite déroulée et traitée thermiquement.

**5.** Procédé de fabrication d'une feuille de résine synthétique très rigide selon l'une quelconque des revendications 1 à 4, dans lequel la feuille prétraitée est préchauffée et ensuite compressée sur l'une des surfaces circonférentielles externes du rouleau préchauffé ou de la courroie sans fin chauffante pour y être collée thermiquement.

**6.** Procédé de fabrication d'une feuille de résine synthétique très rigide selon l'une quelconque des revendications 1 à 5, dans lequel la résine est une résine à base de polypropylène.

**7.** Feuille de résine synthétique très rigide obtenue par le procédé de fabrication décrit dans l'une quelconque des revendications 1 à 6.

**8.** Dispositif de fabrication (1) destiné à une feuille de résine synthétique très rigide comprenant :

un dispositif de fabrication d'une feuille prétraitée (2) destiné au moulage d'une feuille prétraitée (14) incluant : un dispositif d'extrusion à tête d'extrudeuse en T (10) ; une section de pression (21) munie d'un premier rouleau de refroidissement (31), d'un deuxième rouleau de refroidissement (32) avec la surface circonférentielle externe recouverte d'une matière élastique (38), d'une première courroie sans fin métallique (36) disposée autour du premier rouleau de refroidissement et du deuxième rouleau de refroidissement et d'un troisième rouleau de refroidissement (33) pourvu de manière à ce que la résine fondue (13) puisse être introduite entre sa surface circonférentielle externe et la surface circonférentielle externe de la première courroie sans fin métallique, au moins l'une des surfaces circonférentielles externes de laquelle est une surface de miroir, la section de pression compressant la résine fondue introduite en même temps que la première courroie sans fil métallique entre le deuxième rouleau de refroidissement et le troisième rouleau de refroidissement ; et une section destinée au maintien et au déplacement de la résine entre la première courroie sans fin métallique et le troisième rouleau de refroidissement ; et
un dispositif de traitement thermique (3) comprenant un rouleau chauffé (51) et une courroie sans fin chauffante métallique (57) chauffée et avec sa surface circonférentielle externe faisant face à la surface circonférentielle externe du rouleau pour que la courroie puisse circuler, le dispositif de traitement thermique étant apte à coller thermiquement la feuille prétraitée produite par le dispositif de fabrication de la feuille prétraitée sur l'une des surfaces circonférentielles externes du rouleau et sur la courroie sans fin chauffante en déplaçant la feuille entre les surfaces circonférentielles externes du rouleau et la courroie sans fin chauffante et en décollant la feuille de la surface circonférentielle externe du rouleau et ensuite de la surface circonférentielle externe de la courroie sans fin chauffante.

**9.** Dispositif de fabrication d'une feuille de résine synthétique selon la revendication 8, comprenant en outre :

un quatrième rouleau ; et
une deuxième courroie sans fin métallique qui est disposée autour du troisième rouleau de refroidissement et du quatrième rouleau de refroidissement pour que la deuxième courroie sans fin puisse circuler dans le sens inverse du sens de circulation de la première courroie métallique sans fil et qui est pourvue de la surface circonférentielle externe faisant face à la surface circonférentielle externe de la première courroie sans fin métallique, dans lequel
la résine cristalline fondue est introduite entre la première courroie sans fin métallique et la deuxième courroie sans fin métallique tandis qu'elles sont compressées avec la première courroie sans fin métallique et la deuxième courroie sans fin métallique entre le deuxième rouleau de refroidissement et le troisième rouleau de refroidissement afin de tremper la feuille.

**10.** Dispositif de fabrication d'une feuille de résine synthétique très rigide selon la revendication 8 ou la revendication 9, comprenant en outre un dispositif de préchauffage pourvu entre le dispositif de fabrication d'une feuille prétraitée et le dispositif de préchauffage de manière à faire préchauffer la feuille prétraitée moulée par le dispositif de fabrication de la feuille prétraitée avant que la feuille ne soit collée sur l'une des surfaces circonférentielles externes du rouleau et de la courroie sans fin chauffante dans le dispositif de traitement thermique.

**11.** Dispositif de fabrication destiné à une feuille de résine synthétique très rigide selon l'une quelconque des revendications 8 à 10, dans lequel le dispositif de traitement thermique comprend un rouleau élastique pour la soudure temporaire et le collage thermique de la feuille prétraitée sur l'une des surfaces circonférentielles externes du rouleau et sur la courroie sans fin chauffante afin d'y coller thermiquement la feuille.

# FIG.1

EP 1 491 320 B1

# FIG.2

# FIG.3

EP 1 491 320 B1

# FIG.4

# FIG.5

# F I G. 6

# F I G. 7

# FIG.8

# FIG.9

# F I G . 1 0

# F I G . 1 1

# FIG.12

# FIG.13

AIR LAYER

SHEET

BELT

**REFERENCES CITED IN THE DESCRIPTION**

**Patent documents cited in the description**

- JP HEI929818 B
- JP HEI9136346 B
- EP 0781644 A
- EP 0796716 A
- EP 0716911 A